# EUROPEAN PATENT APPLICATION

(11) **EP 4 831 709 A1**
(43) Date of publication of application: **28.10.2026**
(21) Application number: 25891426.6
(22) Date of filing: 13.11.2025
(51) Int. Cl.: G02B 6/44

(54) **STRANDED OPTICAL CABLE HAVING NO BINDING YARN LAYER AND MANUFACTURING SYSTEM AND METHOD THEREFOR**

(30) Priority: 18.11.2024 CN 202411644806; 18.11.2024 CN 202422805438 U
(71) Applicant: Yangtze Optical Fibre and Cable Joint Stock Limited Company, East Lake High-tech Development Zone Wuhan Hubei 430073 (CN)
(72) Inventor: DUAN, Wentao, Wuhan, Hubei 430073 (CN); RUAN, Yunfang, Wuhan, Hubei 430073 (CN); XIAO, Yi, Wuhan, Hubei 430073 (CN); LI, Bin, Wuhan, Hubei 430073 (CN); ZHAN, Hao, Wuhan, Hubei 430073 (CN); HUANG, Jun, Wuhan, Hubei 430073 (CN); QI, Lin, Wuhan, Hubei 430073 (CN); YANG, Xiangrong, Wuhan, Hubei 430073 (CN); XIONG, Zhuang, Wuhan, Hubei 430073 (CN)
(74) Representative: Lorenz Seidler Gossel Part. mbB
(86) International application number: PCT/CN2025/134612
(87) International publication number: WO 2026/103782

(57) **Abstract**

The present application relates to the technical field of optical communication transmission, and relates to a stranded optical cable having no binding yarn layer and a manufacturing system and method therefor. Said stranded optical cable comprises: a cable core, wherein the cable core comprises a central strength member and a plurality of loose buffer tubes, a plurality of optical fibers are arranged in the loose buffer tubes, and the loose buffer tubes are stranded on the surface the central strength member; and an outer sheath, wherein the outer sheath covers and is attached to the outside of the cable core, so that the cable core is directly bound by the outer sheath, in addition, a non-yarn water blocking element is filled between the central strength member and the loose buffer tubes, and a non-strip water blocking element is filled between the cable core and the outer sheath. No binding yarn is provided outside the cable core of said stranded optical cable of the present application, and there is no water-blocking yarn inside the cable core; compared with a binding-yarn optical cable, the optical cable has a higher roundness and a smaller diameter.

## Description

### Technical Field

The present disclosure relates to optical communication transmission technology, and more specifically, relates to a binderless layer-stranded optical cable and a manufacturing system and a manufacturing method therefor.

### Related Art

With the surge in global data traffic and the diversification of Internet applications, conventional optical cables are facing challenges with respect to transmission capacity and spatial footprint. At present, conventional optical cables commonly employ water-blocking yarn to bind the cable core after it has been stranded to form the cable, or, during SZ stranding, adopt a film-extrusion process to extrude a thin layer of thermoplastic elastomer (the "film layer") in lieu of yarn binding. However, under these manufacturing processes, the cable diameter is constrained by the binding-yarn layer and the film layer, rendering diameter minimization particularly difficult. Consequently, optical cables are typically bulkier, making it challenging to meet increasingly stringent communication requirements, including high-density cabling and ultra-miniaturized optical-cable designs.

### SUMMARY

The purpose of the present disclosure is to provide a binderless layer-stranded optical cable and a manufacturing system and a method therefor, which overcomes or alleviates the above-mentioned defects, and this type of optical cable may have a very small diameter.

A binderless layer-stranded optical cable provided by the present disclosure specifically includes:

A cable core, the cable core includes a center-reinforcing member and a plurality of loose tubes, the loose tubes are provided with a plurality of optical fibers therein, and the loose tubes are stranded on a surface of the center-reinforcing member;

An outer sheath, the outer sheath covers and fits the outside of the cable core, so that the cable core is directly bound by the outer sheath;

At the same time, a space between the center-reinforcing member and the loose tubes is filled with a non-yarn water-blocking element, and a space between the cable core and the outer sheath is filled with a non-tape water-blocking element.

By virtue of the foregoing technical solutions conceived in the present disclosure, and compared with the related art, the cable core of the present optical cable is directly constrained by the outer sheath. Relative to binder-yarn optical cables, the present optical cable exhibits higher overall circularity, and its internal water-blocking elements may be selected from a diverse range. In comparison with binder-yarn optical cables and film-layer binding optical cables, the present optical cable may achieve a smaller diameter and a lower cost. Accordingly, the present optical cable is particularly suitable for meeting increasingly stringent communication requirements, including high-density cabling and ultra-fine optical cable designs.

As a further preference, the cable core further includes a plurality of filler ropes, and the loose tubes and filler ropes are stranded together on the surface of the center-reinforcing member;

The non-yarn water-blocking element is filled in gaps between the center-reinforcing member, the loose tubes, and the filler ropes.

As a further preference, the non-yarn water-blocking element is water-blocking powder or water-blocking grease.

As a further preference, the non-tape water-blocking element is the water-blocking powder, the water-blocking grease, or water-blocking yarn.

As a further preference, the non-tape water-blocking element and the non-yarn water-blocking element are made of the same type of material.

As a further preference, the non-tape water-blocking element and the non-yarn water-blocking element both adopt the water-blocking powder, and a particle size of the water-blocking powder is between 50 um and 1000 um.

As a further preference, a rip cord is provided between the cable core and the outer sheath, or a water-blocking yarn extending axially and capable of being used for opening cables is provided.

As a further preference, the outer sheath has at least one tearable portion, and the tearable portion extends along an axial direction of the outer sheath.

As a further preference, the loose tube has a diameter less than 1.5 mm and a wall thickness less than 0.3 mm.

As a further preference, the center-reinforcing member is made of a material including a single metal or a fiber-reinforced composite material (FRP); and/or,

The outer sheath is made of a material including at least one of polyethylene (PE), polyvinyl chloride (PVC), thermoplastic polyurethane (TPU), nylon (PA), and low-smoke, halogen-free flame-retardant polyolefin (LZSH); and/or,

The loose tube is made of a material including at least one of poly(butylene terephthalate) (PBT), polycarbonate (PC), polypropylene (PP), polyethylene terephthalate (PET), and thermoplastic polyester elastomer (TPEE); and/or,

The loose tube adopts a dry-type loose tube or a grease-filled loose tube.

A manufacturing system provided by a second aspect of the present disclosure adopts the following technical solution:

A manufacturing system for manufacturing the binderless layer-stranded optical cable according to the first aspect includes:

A pay-off device for paying off a center-reinforcing member, m loose tubes, and n filler ropes, wherein m≥1 and n≥0;

A vacuum water-blocking powder filling system for stranding the center-reinforcing member, the m loose tubes, and the n filler ropes into a cable and for negative pressure excess filling of water-blocking powder;

A die head for extrusion-forming of an outer sheath, and for directly binding a cable core with the water-blocking powder when the outer sheath is extrusion-formed.

As a further preference, the manufacturing system further includes a pre-stranding device. The pre-stranding device is disposed between the pay-off device and the vacuum water-blocking powder filling system, and is provided for preliminary stranding and shaping of the center-reinforcing member, the m loose tubes, and the n filler ropes.

As a further preference, the manufacturing system further includes a pre-stranding device. The pre-stranding device is disposed between the pay-off device and the vacuum water-blocking powder filling system, and is provided for preliminary stranding and shaping of the center-reinforcing member, the m loose tubes, and the n filler ropes.

As a further preference, the vacuum water-blocking powder filling system includes a negative pressure water-blocking powder chamber, wherein:

An outlet end of the negative pressure chamber protrudes outward to form a pointed cable extrusion head, and the negative pressure chamber forms a converging cable outlet at the cable extrusion head;

An inlet end of the negative pressure chamber is installed with a rotating cover having a plurality of perforations. The rotating cover is rotatably connected to the inlet end, and is configured to strand the center-reinforcing member, the m loose tubes, and the n filler ropes that extend into an inner cavity of the negative pressure chamber through the perforations.

As a further preference, the negative pressure chamber further has a powder inlet and a powder outlet, and a line formed between the powder inlet and the powder outlet intersects with a conveying trajectory of the center-reinforcing member in the negative pressure chamber.

As a further preference, the die head has an extrusion chamber. The extrusion chamber has an outer sheath material feed inlet and an extrusion outlet. The cable outlet of the negative pressure chamber extends into the extrusion outlet of the extrusion chamber, and the cable outlet is coaxial with the extrusion outlet.

As a further preference, the system further includes an electrostatic generator. The electrostatic generator is configured to generate static electricity on the center-reinforcing member at the inlet end of the negative pressure chamber;

Or, the system further includes a medium supply device. The medium supply device is configured to cause the center-reinforcing member at the inlet end of the negative pressure chamber to carry a medium attached with the water-blocking powder.

A manufacturing method provided by the third aspect of the present disclosure adopts the following technical solution:

A manufacturing method for manufacturing the binderless layer-stranded optical cable according to the first aspect includes:

Providing a center-reinforcing member, n filler ropes, and m loose tubes containing optical fibers, wherein m≥1, n≥0;

In a negative pressure chamber, stranding the n filler ropes and the m loose tubes on an outer surface of the center-reinforcing member to form a cable core, extruding an outer sheath at a cable outlet of the negative pressure chamber, and causing the outer sheath to wrap around the cable core, wherein the outer sheath is cooled and shrunk and directly shapes and binds the cable core, and,

In the negative pressure chamber, filling water-blocking powder between the center-reinforcing member, the n filler ropes, and the m loose tubes, and on an outer surface of the formed cable core.

As a further preference, before filling the water-blocking powder, causing the center-reinforcing member to carry static electricity, or causing a surface of the center-reinforcing member to carry a medium attached with the water-blocking powder.

As a further preference, when filling the water-blocking powder, continuously drawing an excessive amount of the water-blocking powder into the negative pressure chamber, then reducing and shaping the excessive amount of the water-blocking powder attached to the surface of the cable core through the cable outlet of the negative pressure chamber, and outputting the water-blocking powder not filled into the optical cable through a powder outlet of the negative pressure chamber.

As a further preference, in the method, the outer sheath extruded at the extrusion outlet and the cable core with the water-blocking powder at the cable outlet are coaxially output and integrally cooled and shaped, so that the outer sheath directly binds the cable core and the water-blocking powder, thus producing the binderless layer-stranded optical cable.

In summary, compared with the related art, the technical solutions conceived by the present disclosure mainly have the following technical advantages:

1. In the present optical cable, the cable core is directly restrained by the outer sheath. Compared with binder-yarn optical cables, the present optical cable exhibits higher overall roundness, and a variety of internal water-blocking elements may be selectively employed. Compared with binder-yarn and film-layer-bound optical cables, the present optical cable may achieve a smaller diameter and a lower cost, thereby rendering it particularly suitable for meeting increasingly stringent communications requirements, including high-density cabling and ultra-thin optical cable designs.

2. During the manufacture of the present optical cable, the water-blocking powder is added concurrently with the stranding of the cable core. Thereafter, at the cable outlet, the cable core bearing the water-blocking powder is coaxially discharged together with the newly extruded outer sheath and integrally cooled to set, thereby rapidly producing the binderless layer-stranded optical cable. This operation is rapid and precise, and the finished optical cable exhibits high stability.

### BRIEF DESCRIPTION OF THE DRAWINGS

FIG. 1 is a radial cross-sectional structural diagram of a binderless layer-stranded optical cable in which an internal non-yarn water-blocking element and a non-tape water-blocking element are made of the same type of material, provided by an embodiment of the present disclosure.
FIG. 2 is a radial cross-sectional structural diagram of a binderless layer-stranded optical cable in which an internal non-yarn water-blocking element and a non-tape water-blocking element are made of different types of material, provided by an embodiment of the present disclosure.
FIG. 3 is a manufacturing flowchart of a binderless layer-stranded optical cable provided by an embodiment of the present disclosure.
FIG. 4 is a schematic diagram of a process of an outer sheath covering a cable core and water-blocking powder, provided by an embodiment of the present disclosure.

In all drawings, the same reference numerals are configured to indicate the same elements or structures, wherein:
1. Outer sheath; 1-1. Tearable portion; 2. Center-reinforcing member; 3. Loose tube; 4. Non-yarn water-blocking element; 5. Non-tape water-blocking element; 6. Rip cord; 7. Pay-off stand; 7-1. Center-reinforcing member pay-off stand; 7-2. Loose tube pay-off stand; 8. Tension dancer wheel; 9. Stranding cage; 10. Vacuum water-blocking powder filling system; 11. Die head; 12. Extruder; 13. Water tank; 13-1. Anti-torsion device; 14. Blow-drying device; 15. Marking machine; 16. Main traction device; 17. Take-up stand; 18. Negative pressure chamber; 18-1. Converging cable outlet; 18-2. Powder inlet; 18-3. Powder outlet; 19. Electrostatic generator; 20. Rotating cover; 21. Extrusion chamber; 21-1. Extrusion outlet; 21-2. Outer sheath material feed inlet.

### DESCRIPTION OF THE EMBODIMENTS

In order to make the objectives, technical solutions, and advantages of the present disclosure clearer, the present disclosure is further described in detail below with reference to the drawings and embodiments. It should be understood that the specific embodiments described herein are only configured to explain the present disclosure and are not intended to limit the present disclosure.

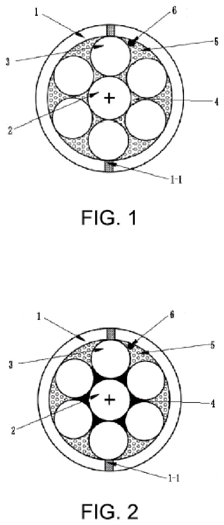

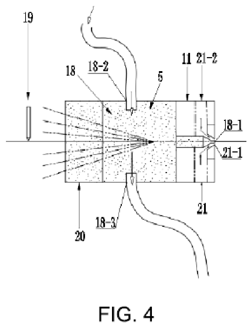

The following further describes the present disclosure in detail with reference to FIG. 1 to FIG. 4.

An embodiment of the present disclosure discloses a binderless layer-stranded optical cable and a manufacturing system and manufacturing method therefor.

Referring to FIG. 1 to FIG. 2, the binderless layer-stranded optical cable includes a cable core and an outer sheath 1. The cable core includes a center-reinforcing member 2 and a plurality of loose tubes 3. The loose tubes 3 are provided with a plurality of optical fibers therein, and the loose tubes 3 are stranded on a surface of the center-reinforcing member 2. The outer sheath 1 covers and fits around the cable core, so that the cable core is directly bound by the outer sheath 1. Meanwhile, a non-yarn water-blocking element 4 is filled between the center-reinforcing member 2 and the loose tubes 3. A non-tape water-blocking element 5 is filled between the cable core and the outer sheath 1.

Further, the cable core may also include filler ropes, and the loose tubes 3 and the filler ropes are stranded together on the surface of the center-reinforcing member 2, and the non-yarn water-blocking element 4 is filled between the center-reinforcing member 2, the loose tubes 3, and the filler ropes. That is, in some embodiments, the cable core includes one center-reinforcing member 2, m loose tubes 3, and n filler ropes, wherein m≥1, n≥0. The m loose tubes 3 and the n filler ropes are stranded on the surface of the center-reinforcing member 2. The non-yarn water-blocking element 4 is filled between the center-reinforcing member 2, the m loose tubes 3 and the n filler ropes. In some preferred technical solutions, m+n≥3.

Further, the center-reinforcing member 2 is made of a material including, but is not limited to, a single metal or a fiber-reinforced composite material (FRP).

Further, the loose tube 3 is made of a material including, but is not limited to, at least one of poly(butylene terephthalate) (PBT), polycarbonate (PC), polypropylene (PP), polyethylene terephthalate (PET), and thermoplastic polyester elastomer (TPEE).

In addition, the loose tube 3 may adopt a dry-type loose tube or a grease-filled loose tube. The loose tube 3 is preferably a miniature sleeve with a diameter of 1.5 mm or less. The number of fibers per tube is preferably between 1 and 24, and a wall thickness of the loose tube 3 is preferably less than 0.3 mm. In some specific embodiments, the loose tube 3 may be a miniature sleeve with a diameter of 1.0 mm or less.

Further, the m loose tubes 3 and the n filler ropes are stranded on the surface of the center-reinforcing member 2 by SZ stranding.

Further, the non-yarn water-blocking element 4 may be water-blocking powder or water-blocking grease.

Further, in some embodiments, the non-tape water-blocking element 5 may be at least one of the water-blocking powder, the water-blocking grease, or water-blocking yarn. In some embodiments, the type of material adopted by the non-tape water-blocking element 5 and the type of material adopted by the non-yarn water-blocking element 4 may be the same, for example: the non-tape water-blocking element 5 and the non-yarn water-blocking element 4 both adopt the water-blocking powder.

Further, when the non-yarn water-blocking element 4 and/or the non-tape water-blocking element 5 is selected as water-blocking powder, a particle size of the water-blocking powder is preferably between 50 um and 1000 um. The water absorption of the water-blocking powder is not less than 100g₁/g₂, wherein g₁ represents the weight of water, and g₂ represents the weight of the water-blocking powder.

It may be understood that, in the entire optical cable, a gap enclosed between the center-reinforcing member 2 in the cable core and the m loose tubes 3 and the n filler ropes is an inner filling gap, and a gap enclosed between an outer surface of the cable core and a loose tube sleeve is an outer filling gap, wherein the non-yarn water-blocking element 4 will fill the inner filling gap, and the non-tape water-blocking element 5 will fill the outer filling gap.

Further, the outer sheath 1 is a sleeve that is extrusion-formed on an outer periphery of the cable core, and binds the cable core and the water-blocking powder after being subjected to cooling and shrinkage shaping. The outer sheath 1 is made of a material including, but is not limited to, at least one of polyethylene (PE), polyvinyl chloride (PVC), thermoplastic polyurethane (TPU), nylon (PA), and low-smoke, halogen-free flame-retardant polyolefin (LZSH).

Further, in some embodiments, the outer sheath 1 may further have at least one tearable portion 1-1, and the tearable portion 1-1 preferably extends along an axial direction of the outer sheath 1.

Further, a rip cord 6, or a water-blocking yarn extending axially and capable of being used for opening cables, may also be disposed between the outer surface of the cable core and the outer sheath 1. It should be noted that the design of the tearable portion 1-1, the rip cord 6, and/or the water-blocking yarn is not mandatory. These designs may be added or removed according to actual usage requirements.

For ease of understanding, in a specific embodiment of the binderless layer-stranded optical cable as shown in FIG. 1, the cable core of the optical cable includes the center-reinforcing member 2 and six loose tubes 3, wherein the six loose tubes 3 are stranded on an outer surface of the center-reinforcing member 2 in an SZ stranding manner. The outer sheath 1 of the optical cable has two tearable portions 1-1, and the two tearable portions 1-1 are symmetrically distributed in a radial direction. In addition, the optical cable is filled with the non-tape water-blocking element 5 and the non-yarn water-blocking element 4, and both the non-tape water-blocking element 5 and the non-yarn water-blocking element 4 are water-blocking powder. Furthermore, the rip cord 6 is also filled between the outer surface of the cable core and the outer sheath 1 in the optical cable.

In the present design, the cable core of the optical cable is directly bound by the outer sheath 1. Compared with binder-yarn optical cables, the optical cable disclosed herein exhibits higher overall circularity. In comparison with binder-yarn optical cables and film-layer binding optical cables, the present optical cable may achieve a smaller diameter and a lower cost. Accordingly, the present optical cable is particularly suitable for meeting increasingly stringent communication requirements, including high-density cabling and ultra-miniaturized optical-cable designs.

Since there is no water-blocking yarn in the cable core, the loose tubes 3 will not be squeezed by water-blocking yarn during the cabling process. All loose tubes 3 are evenly distributed around the center-reinforcing member 2, and the roundness of the optical cable may still be maintained after the extruded outer sheath 1 is cooled and shrunk. The optical cable may still maintain a good shape at reversal points, and the cost of the water-blocking powder is much lower than that of the water-blocking yarn.

Furthermore, as compared with conventional approaches that employ a thermoplastic elastomer (i.e., a film layer) in lieu of yarn binding, the present scheme adopts a single-step process for integrally forming the cable sheath, thereby eliminating the cost of the special film-layer material and obviating the film-layer application step, resulting in reduced labor costs and improved manufacturing efficiency.

Of particular significance in the field of ultra-small-diameter optical cable manufacturing, the design disclosed herein may be employed in lieu of the conventional yarn-binding process, thereby making feasible the SZ stranding of thin-walled, ultra-micro loose tubes into a cable with a diameter of less than 1.0 mm. This technology both resolves the issue that, following yarn binding of ultra-micro loose tubes, unstable tension control causes tube damage and attenuation in excess of specified limits, or results in attenuation exceeding specified limits during subsequent temperature-cycling tests; and also addresses the issue that water-blocking yarn within the cable core exerts compressive force on the loose tube, causing compression damage that leads to attenuation in excess of specified limits, or to exceedances during subsequent temperature-cycling tests.

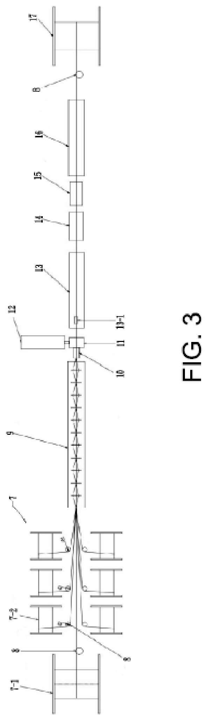

Further, referring to FIG. 3 to FIG. 4, for manufacturing the binderless layer-stranded optical cable, a manufacturing system for manufacturing the binderless layer-stranded optical cable mainly includes: a pay-off device, a vacuum water-blocking powder filling system 10, a die head 11, an extruder 12, a water tank 13, a blow-drying device 14, and a marking machine 15. The pay-off device is provided for paying off the center-reinforcing member 2, the m loose tubes 3, and the n filler ropes 4, wherein m≥1 and n≥0. The pay-off device includes but is not limited to a pay-off stand. A stranding device is provided for preliminary stranding and shaping of the center-reinforcing member 2, the m loose tubes 3, and the n filler ropes 4. The stranding device includes but is not limited to a stranding cage 9. The vacuum water-blocking powder filling system 10 is provided for stranding the center-reinforcing member 2, the m loose tubes 3, and the n filler ropes 4 into a cable, and for negative pressure excess filling of the water-blocking powder. The die head 11 is installed at a cable outlet of the vacuum water-blocking powder filling system 10, and is provided for extrusion-forming of the outer sheath, so that the cable core with the water-blocking powder is directly bound when the outer sheath is extrusion formed.

Further, for manufacturing the binderless layer-stranded optical cable, a manufacturing method mainly includes:

Providing one center-reinforcing member 2, the n filler ropes 4, and the m loose tubes 3 containing optical fibers, wherein m≥1 and n≥0; stranding the n filler ropes 4 and the m loose tubes 3 on the outer surface of the center-reinforcing member 2 in a negative pressure chamber 18 to form a cable core, extruding the outer sheath 1 at a cable outlet 18-1 of the negative pressure chamber 18, and causing the outer sheath 1 to wrap the cable core, wherein the outer sheath 1 is cooled, shrunk, and directly shaped to bind the cable core, and, during the stranding of the n filler ropes 4 and the m loose tubes 3 through to the covering of the outer sheath 1, filling the water-blocking powder between the center-reinforcing member 2, the n filler ropes 4, the m loose tubes 3, and the outer sheath 1 through negative pressure in the negative pressure chamber 18.

For ease of understanding, the further detailed configuration of the manufacturing system and the detailed manufacturing method of the optical cable are discussed as follows:

First: the center-reinforcing member 2, the m loose tubes 3, and the n filler ropes 4 on each of the pay-off stand 7 (such as a center-reinforcing member pay-off stand 7-1, a loose tube pay-off stand 7-2, etc.) are drawn through their respective corresponding tension dancer wheels 8, and guided by the tension dancer wheels 8 into a pre-stranding device for pre-stranding of the center-reinforcing member 2, the m loose tubes 3, and the n filler ropes 4. The pre-stranding device includes but is not limited to the stranding cage 9. When the stranding cage 9 is selected, the stranding cage 9 performs preliminary stranding and shaping of the center-reinforcing member 2, the n filler ropes 4, and the m loose tubes 3 at a preset stranding pitch.

Subsequently, the center-reinforcing member 2, the n filler ropes 4, and the m loose tubes 3 enter the vacuum water-blocking powder filling system 10 for the addition of the water-blocking powder and stranding into the cable core. Immediately thereafter, at the die head 11 of the cable outlet 18-1 of the system, the outer sheath 1 is extruded and formed through the extruder 12, causing the outer sheath 1 to be extruded, formed, and wrapped around the outer periphery of the cable core, and binding the cable core and the water-blocking powder through cooling, shrinking, and shaping to form the binderless layer-stranded optical cable.

After the outer sheath 1 is extruded and formed, the optical cable passes through the water tank 13, the blow-drying device 14, and the marking machine 15 in sequence. Cooling of the optical cable by water is performed in the water tank 13, a blow-drying operation is performed at the blow-drying device 14, and a marking operation is performed at the marking machine 15. Thereafter, the optical cable is drawn by a main traction device 16 and guided by the tension dancer wheels 8 at the rear end, so that the optical cable is wound into a take-up stand 17. Preferably, an anti-torsion device 13-1 may also be provided for the optical cable in the water tank 13 to prevent torsion or reversal of the optical cable from causing untwisting of the stranded loose tubes.

Generally speaking, the size and installation position of the tension dancer wheels 8 may be selected according to the size of the material to be guided and the required tension. For example, if the loose tube 3 and the filler rope 4 are small and the required tension is small, the corresponding tension dancer wheels 8 may be integrated on the pay-off stand 7 wound with the loose tube 3 or the filler rope 4, and the tension dancer wheels 8 may also be correspondingly selected as small-sized tension dancer wheels 8. In another example, if the center-reinforcing member or the optical cable is large and the required tension is large, the corresponding tension dancer wheels 8 may be independently installed and used through a bracket or other structure, and correspondingly selected as large-sized tension dancer wheels 8.

Specifically, as shown in FIG. 3, in some specific embodiments, the vacuum water-blocking powder filling system 10 includes the negative pressure chamber 18. An electrostatic generator 19 is provided at an inlet end of the negative pressure chamber 18, and the electrostatic generator 19 is capable of causing the center-reinforcing member 2 to generate static electricity, so that after the center-reinforcing member 2 enters the negative pressure chamber 18, the water-blocking powder is attached thereto through electrostatic adsorption.

Of course, in other embodiments, a medium supply device may also be provided at the inlet end of the negative pressure chamber 18, and the center-reinforcing member 2 may carry a medium capable of attaching to the water-blocking powder through the medium supply device, so that the water-blocking powder is attached to the center-reinforcing member 2. For example, the medium supply device includes a water mist generator, and water mist is sprayed toward the center-reinforcing member 2 through the water mist generator. After the center-reinforcing member 2 enters the negative pressure chamber 18, the center-reinforcing member 2 attaches to the water-blocking powder through surface moisture.

Furthermore, as shown in FIG. 3, at the negative pressure chamber 18, a rotating cover 20 with a plurality of perforations is installed at the inlet end of the negative pressure chamber 18, an outlet end of the negative pressure chamber 18 protrudes outward to form a pointed cable extrusion head, and the negative pressure chamber 18 forms a converging cable outlet 18-1 at the cable extrusion head. The rotating cover 20 is rotatably connected to the inlet end, and a rotation axis is coaxial with a lateral axis of the negative pressure chamber, and the rotating cover 20 may rotate in linkage with the SZ stranding process of the stranding cage 9, so as to strand the center-reinforcing member 2, the n filler ropes 4, and the m loose tubes 3 that are inserted into the negative pressure chamber 18 through the perforations.

Furthermore, the negative pressure chamber 18 has a powder inlet 18-2 and a powder outlet 18-3, so that the negative pressure chamber 18 may serve as a water-blocking powder filling chamber. Preferably, at the negative pressure chamber 18, a line formed between the powder inlet 18-2 and the powder outlet 18-3 intersects with a conveying trajectory (or a length direction or an extension direction of the center-reinforcing member 2) of the center-reinforcing member 2. In some embodiments, a plurality of sets of powder inlets 18-2 and powder outlets 18-3 may also be provided in the negative pressure chamber 18. For example, in addition to the powder inlet 18-2 and the powder outlet 18-3 shown in FIG. 3, the powder inlet 18-2 and the powder outlet 18-3 may further be added at the cable extrusion head to further replenish the water-blocking powder.

Furthermore, the powder inlet 18-2 of the negative pressure chamber 18 is connected to a powder metering conveying device through a pipeline, and the powder metering conveying device is configured to supply water-blocking powder into the negative pressure chamber 18. The powder outlet 18-3 of the negative pressure chamber 18 is connected to a discharge pipeline with a fan, and the fan is configured to generate a negative pressure in the negative pressure chamber 18, draw out the excessive amount of the water-blocking powder from the negative pressure chamber 18, and achieve directional conveying of the water-blocking powder within the negative pressure chamber 18. For ease of understanding, a conveying direction of the water-blocking powder is roughly indicated by hollow arrows in FIG. 3.

In addition, the discharge pipeline may also be equipped with a centrifugal separation and filtration system for filtering and recovering the water-blocking powder. The centrifugal separation and filtration system is preferably installed at a suction end of the fan to prevent the water-blocking powder from entering a centrifugal fan and avoid dust explosions.

Furthermore, the die head 11 further includes an extrusion chamber 21 provided at the outlet end of the negative pressure chamber 18, and the extrusion chamber 21 has an outer sheath material feed inlet 21-2 and an extrusion outlet 21-1. The cable outlet 18-1 of the negative pressure chamber 18 extends into the extrusion outlet 21-1 of the extrusion chamber 21, and the cable outlet 18-1 is coaxial with the extrusion outlet 21-1. The outer sheath material feed inlet 21-2 is connected to the extruder 12, and the extruder 12 may extrude a sheath material into the extrusion chamber 21 along the outer sheath material feed inlet 21-2, so that the sheath material is extruded at the extrusion outlet 21-1 to form the outer sheath 1.

During operation, the excessive amount of water-blocking powder is continuously fed into the negative pressure chamber 18 through the powder metering conveying system, and then the excessive amount of water-blocking powder attached to the surface of the cable core is trimmed and shaped by an inner wall of the cable outlet 18-1 of the negative pressure chamber 18, and the water-blocking powder not filled into the optical cable is output through the powder outlet 18-3 of the negative pressure chamber 18. The extruder 12 is extruded to form the outer sheath 1 at the extrusion outlet 21-1 of the extrusion chamber 21, so that the outer sheath 1 extruded at the extrusion outlet 21-1 and the cable core with the water-blocking powder at the cable outlet 18-1 are coaxially output and integrally cooled and shaped, so that the outer sheath 1 directly binds the cable core and the water-blocking powder, thus producing the binderless layer-stranded optical cable.

It should be understood that, in the present optical cable manufacturing system, mechanisms, equipment, and devices such as fans and extruders may be subjected to program control via a control terminal so as to achieve automated and controllable operation. The underlying control principles are commonly known in the art and are therefore not further elaborated herein.

It should be understood that expressions such as "includes" and "may include" used in the present disclosure indicate the existence of disclosed functions, operations, or constituent elements, and do not limit one or more additional functions, operations, and constituent elements. In the present disclosure, terms such as "includes" and/or "has" may be interpreted as indicating specific characteristics, numbers, operations, constituent elements, components, or combinations thereof, but may not be interpreted as excluding the existence or possibility of addition of one or more other characteristics, numbers, operations, constituent elements, components, or combinations thereof.

It should be understood that the orientation or positional relationships indicated by the terms "center," "upper," "lower," "front," "rear," "left," "right," "vertical," "horizontal," "inner," "outer," "clockwise," "counterclockwise," "axial," "radial," "circumferential," and the like are based on the orientation or positional relationships shown in the accompanying drawings, and are only for the convenience of describing the present disclosure and simplifying the description, rather than indicating or implying that the device or element referred to must have a specific orientation, be constructed and operated in a specific orientation, and therefore cannot be understood as a limitation on the present disclosure.

In addition, the terms "first" and "second" are provided for descriptive purposes only, and cannot be understood as indicating or implying relative importance or implicitly indicating the number of the indicated technical features. Thus, features defined as "first" and "second" may explicitly or implicitly include one or more of such features. In the description of the present disclosure, "plurality" means two or more, unless otherwise explicitly and specifically defined.

In the present disclosure, unless otherwise explicitly specified and defined, the terms "installation," "connection," "link," "fixation," and the like shall be understood in a broad sense; for example, they may be fixed connection, detachable connection, or integrated connection; they may be mechanical connection or electrical connection; they may be direct connection or indirect connection through an intermediate medium, or internal communication between two elements. For those of ordinary skill in the art, the specific meanings of the above terms in the present disclosure may be understood according to specific circumstances.

Those skilled in the art will readily understand that the above descriptions are only preferred embodiments of the present disclosure and are not intended to limit the present disclosure. Any modifications, equivalent substitutions, and improvements made within the spirit and principles of the present disclosure shall be included within the protection scope of the present disclosure.

## Claims

1. A binderless layer-stranded optical cable, **characterized in** comprising:
a cable core, the cable core comprising a center-reinforcing member (2) and a plurality of loose tubes (3), wherein the loose tubes (3) are provided with a plurality of optical fibers therein, and the loose tubes (3) are stranded on a surface of the center-reinforcing member (2);
an outer sheath (1), the outer sheath (1) covering and fitting an outside of the cable core, so that the cable core is directly bound by the outer sheath (1);
simultaneously, a space between the center-reinforcing member (2) and the loose tubes (3) is filled with a non-yarn water-blocking element (4), and a space between the cable core and the outer sheath (1) is filled with a non-tape water-blocking element (5).

2. The binderless layer-stranded optical cable according to claim 1, **characterized in that** the cable core further comprises a plurality of filler ropes, and the loose tubes (3) and the filler ropes are stranded together on the surface of the center-reinforcing member (2);
the non-yarn water-blocking element (4) is filled in gaps between the center-reinforcing member (2), the loose tubes (3), and the filler ropes.

3. The binderless layer-stranded optical cable according to claim 1 or 2, **characterized in that** the non-yarn water-blocking element (4) is water-blocking powder or water-blocking grease.

4. The binderless layer-stranded optical cable according to claim 1, **characterized in that** the non-tape water-blocking element (5) is water-blocking powder, water-blocking grease, or water-blocking yarn.

5. The binderless layer-stranded optical cable according to claim 1, **characterized in that** the non-tape water-blocking element (5) and the non-yarn water-blocking element (4) are made of a same type of material.

6. The binderless layer-stranded optical cable according to claim 5, **characterized in that** the non-tape water-blocking element (5) and the non-yarn water-blocking element (4) both adopt water-blocking powder, and a particle size of the water-blocking powder is between 50 um and 1000 um.

7. The binderless layer-stranded optical cable according to claim 1 or 2, **characterized in that** a rip cord (6) is provided between the cable core and the outer sheath (1), or a water-blocking yarn extending axially and capable of being used for opening cables is provided.

8. The binderless layer-stranded optical cable according to claim 1 or 2, **characterized in that** the outer sheath (1) has at least one tearable portion (1-1), and the tearable portion (1-1) extends along an axial direction of the outer sheath (1).

9. The binderless layer-stranded optical cable according to claim 1 or 2, **characterized in that** the loose tube (3) has a diameter less than 1.5 mm and a wall thickness less than 0.3 mm.

10. The binderless layer-stranded optical cable according to claim 1 or 2, **characterized in that** the outer sheath (1) is made of a material comprising at least one of polyethylene (PE), polyvinyl chloride (PVC), thermoplastic polyurethane (TPU), nylon (PA), and low-smoke, halogen-free flame-retardant polyolefin (LZSH); and/or
the center-reinforcing member (2) is made of a material comprising a single metal or a fiber-reinforced composite material (FRP); and/or
the loose tube (3) is made of a material comprising at least one of poly(butylene terephthalate) (PBT), polycarbonate (PC), polypropylene (PP), polyethylene terephthalate (PET), and thermoplastic polyester elastomer (TPEE); and/or
the loose tube (3) adopts a dry-type loose tube or a grease-filled loose tube.

11. A manufacturing system for manufacturing a binderless layer-stranded optical cable, **characterized in** comprising:
a pay-off device, configured for paying off a center-reinforcing member (2), m loose tubes (3), and n filler ropes (4), wherein m≥1 and n≥0;
a vacuum water-blocking powder filling system (10), configured for stranding the center-reinforcing member (2), the m loose tubes (3), and the n filler ropes (4) into a cable and for negative pressure excess filling of water-blocking powder;
a die head (11), configured for extrusion-forming of an outer sheath (1), and for directly binding a cable core with the water-blocking powder when the outer sheath (1) is extrusion-formed.

12. The manufacturing system according to claim 11, **characterized in that** the manufacturing system further comprises a pre-stranding device, the pre-stranding device is disposed between the pay-off device and the vacuum water-blocking powder filling system (10), and is provided for preliminary stranding and shaping of the center-reinforcing member (2), the m loose tubes (3), and the n filler ropes (4).

13. The manufacturing system according to claim 11, **characterized in that** the vacuum water-blocking powder filling system (10) comprises a negative pressure chamber (18), wherein:
an outlet end of the negative pressure chamber (18) protrudes outward to form a pointed cable extrusion head, and a converging cable outlet (18-1) is formed at the cable extrusion head;
an inlet end of the negative pressure chamber (18) is installed with a rotating cover (20) having a plurality of perforations, the rotating cover (20) is rotatably connected to the inlet end, and is configured to strand the center-reinforcing member (2), the m loose tubes (3), and the n filler ropes (4).

14. The manufacturing system according to claim 13, **characterized in that** the negative pressure chamber (18) further has a powder inlet (18-2) and a powder outlet (18-3), and a line formed between the powder inlet (18-2) and the powder outlet (18-3) intersects with a conveying trajectory of the center-reinforcing member (2) in the negative pressure chamber (18).

15. The manufacturing system according to claim 13, **characterized in that** the die head (11) has an extrusion chamber (21), the extrusion chamber (21) has an outer sheath material feed inlet (21-2) and an extrusion outlet (21-1), the cable outlet (18-1) of the negative pressure chamber (18) extends into the extrusion outlet (21-1), and the cable outlet (18-1) is coaxial with the extrusion outlet (21-1).

16. The manufacturing system according to claim 11, **characterized in that** the system further comprises an electrostatic generator (19), the electrostatic generator (19) is configured to generate static electricity on the center-reinforcing member (2) at an inlet end of a negative pressure chamber (18);
or, the system further comprises a medium supply device, the medium supply device is configured to cause the center-reinforcing member (2) at the inlet end of the negative pressure chamber (18) to carry a medium attached with the water-blocking powder.

17. A manufacturing method for manufacturing a binderless layer-stranded optical cable, **characterized in that** comprising:
providing a center-reinforcing member (2), n filler ropes (4), and m loose tubes (3) containing optical fibers, wherein m≥1, n≥0;
in a negative pressure chamber (18), stranding the n filler ropes (4) and the m loose tubes (3) on an outer surface of the center-reinforcing member (2) to form a cable core, extruding an outer sheath (1) at a cable outlet (18-1) of the negative pressure chamber (18), and causing the outer sheath (1) to wrap around the cable core, wherein the outer sheath (1) is cooled and shrunk and directly shapes and binds the cable core, and
in the negative pressure chamber (18), filling water-blocking powder between the center-reinforcing member (2), the n filler ropes (4), and the m loose tubes (3), and on an outer surface of the formed cable core.

18. The manufacturing method according to claim 17, **characterized in that** before filling the water-blocking powder, causing the center-reinforcing member (2) to carry static electricity, or causing the surface of the center-reinforcing member (2) to carry a medium attached with the water-blocking powder.

19. The manufacturing method according to claim 17, **characterized in that** when filling the water-blocking powder, continuously drawing an excessive amount of the water-blocking powder into the negative pressure chamber (18), then reducing and shaping the excessive amount of the water-blocking powder attached to the surface of the cable core through an inner wall of the cable outlet (18-1) of the negative pressure chamber (18), and outputting the water-blocking powder not filled into the optical cable through a powder outlet (18-3) of the negative pressure chamber (18).

20. The manufacturing method according to any one of claims 17-19, **characterized in that** in the manufacturing method, the outer sheath (1) extruded at an extrusion outlet (21-1) and the cable core with the water-blocking powder at the cable outlet (18-1) are coaxially output and integrally cooled and shaped, so that the outer sheath (1) directly binds the cable core and the water-blocking powder, thus producing the binderless layer-stranded optical cable.
